(19) **Europäisches Patentamt**
**European Patent Office**
**Office européen des brevets**

(11) **EP 2 520 354 A1**

(12) **EUROPEAN PATENT APPLICATION**
published in accordance with Art. 153(4) EPC

(43) Date of publication:
**07.11.2012 Bulletin 2012/45**

(51) Int Cl.:
***B01D 53/94*** (2006.01)    ***B01D 53/96*** (2006.01)
***B01J 23/96*** (2006.01)    ***B01J 38/00*** (2006.01)
***F01N 3/02*** (2006.01)    ***F01N 3/08*** (2006.01)
***F01N 3/24*** (2006.01)    ***F01N 3/28*** (2006.01)

(21) Application number: **11797918.7**

(22) Date of filing: **09.05.2011**

(86) International application number:
**PCT/JP2011/060623**

(87) International publication number:
**WO 2011/162030 (29.12.2011 Gazette 2011/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2010 JP 2010143317**

(71) Applicant: **N.E. Chemcat Corporation
Tokyo 105-6124 (JP)**

(72) Inventors:
• **BANNO Yasuyuki
Numazu-shi
Shizuoka 410-0314 (JP)**
• **NAGATA Makoto
Numazu-shi
Shizuoka 410-0314 (JP)**

(74) Representative: **Müller-Boré & Partner
Patentanwälte
Grafinger Straße 2
81671 München (DE)**

(54) **EXHAUST GAS CATALYTIC PURGING UNIT USING SELECTIVE REDUCTION CATALYST, EXHAUST GAS PURGING METHOD, AND DIESEL AUTOMOBILE EQUIPPED WITH EXHAUST GAS CATALYTIC PURGING UNIT**

(57)    An exhaust gas purification catalyst apparatus, which is capable of efficiently purifying, for a long period of time, a fine particle component such as hydrocarbon, carbon monoxide, a nitrogen oxide, soot contained in exhaust gas from a lean-burn engine; a method for exhaust gas purification using such an exhaust gas purification catalyst apparatus; and a diesel automobile mounted with this exhaust gas purification catalyst apparatus.

An exhaust gas purification catalyst apparatus arranged with an oxidation catalyst (DOC) having a noble metal component for oxidizing a nitrogen oxide (NO) in exhaust gas discharged from a diesel engine, a reducing agent spraying means for supplying a reducing agent selected from an urea component or an ammonia component, and a selective reduction catalyst (SCR) for reducing the nitrogen oxide ($NO_x$) by making contacted with the reducing agent, in this order from the upstream side of a flow passage of exhaust gas, characterized in that: the selective reduction catalyst (SCR) does not comprise the noble metal component and comprises zeolite or a crystal metal aluminophosphate; and further, a trap means for collecting the noble metal component volatilized from the oxidation catalyst (DOC) is arranged between the oxidation catalyst (DOC) and the selective reduction catalyst (SCR), or the like.

EP 2 520 354 A1

FIG. 1

**Description**

TECHNICAL FIELD

The present invention relates to an exhaust gas purification catalyst apparatus using a selective reduction catalyst; a method for exhaust gas purification; and a diesel automobile mounted with the exhaust gas purification catalyst apparatus, and in more detail, the present invention relates to an exhaust gas purification catalyst apparatus, which is capable of efficiently purifying, for a long period of time, a fine particle component such as a hydrocarbon, carbon monoxide, a nitrogen oxide, soot, contained in exhaust gas from a lean-burn engine; a method for exhaust gas purification using such an exhaust gas purification catalyst apparatus; and a diesel automobile mounted with this exhaust gas purification catalyst apparatus).

BACKGROUND ART

Exhaust gas discharged from a lean-burn engine such as a boiler, a gas turbine or a lean burn type gasoline engine, a diesel engine, contains various harmful substances derived from fuel or combustion air. Such harmful substances include a hydrocarbon (HC), a Soluble Organic Fraction (it may also be referred to as SOF), soot, carbon monoxide (CO), a nitrogen oxide ($NO_x$) and the like, and regulations on discharge amount of these harmful substances have been tightened year by year.

In such a lean-burn engine, there has been investigated suppression of generation amount of the harmful substances by controlling kind, supply amount and supply timing of fuel, amount of air or the like, or a purification method by making exhaust gas contacted with a catalyst. However, a conventional catalyst or control method has not been possible to purify exhaust gas in a satisfactory level. In particular, because of easy discharge of a nitrogen oxide in a lean-burn engine, in the case of a diesel engine to be mounted on an automobile, due to always changing operation condition thereof, it is difficult to suppress discharge of the harmful substances.

Further, in recent years, regulations on discharge amount of carbon dioxide ($CO_2$), as green house effect gas, has been tightened. Because discharge amount of $CO_2$ is proportional to amount of fuel used in engine operation, it is desired that fuel to be used is less and fuel consumption is good in a combustion engine. A diesel engine is a combustion engine exhibiting good fuel consumption and low discharge amount of $CO_2$, however, a large quantity of $NO_x$ is included in exhaust gas.

To suppress discharge of $NO_x$ in a diesel engine, it is considered to decrease air/fuel ratio to supply a large amount of fuel, which is also a reducing component, to an engine, however, this incurs deterioration of fuel consumption and also increases discharge of $CO_2$. In addition, such a combustion control cannot take advantage of a diesel engine, which has good fuel consumption.

As technology for purifying $NO_x$ (hereafter may be referred to as denitrification or De-$NO_x$), technology for reductive denitrification by making exhaust gas containing $NO_x$ contacted with a selective reduction catalyst having titanium oxide, vanadium oxide, zeolite or the like, as a main component, under the presence of an ammonia ($NH_3$) component, has been known as a selective reduction method, or Selective Catalytic Reduction (hereafter may be called SCR).

In this SCR, where the $NH_3$ component is used as a reducing agent, $NO_x$ is finally reduced to $N_2$ mainly by the following reactions (1) to (3):

$$4NO + 4NH_3 + O_2 \rightarrow 4N_2 + 6H_2O \qquad (1)$$

$$2NO_2 + 4NH_3 + O_2 \rightarrow 3N_2 + 6H_2O \qquad (2)$$

$$NO + NO_2 + 2NH_3 \rightarrow 2N_2 + 3H_2O \qquad (3)$$

In such a denitrification catalyst system, because $NH_3$ itself, which is a reducing component, has harmful property such as irritating odor, there has been proposed a system for adding urea water, as the $NH_3$ component, from the upstream of a denitrification catalyst, to generate $NH_3$ by pyrolysis or hydrolysis, and to have this acted as a reducing agent.

Reaction formulae for obtaining such a $NH_3$ component by decomposition of urea are as follows:

$$NH_2\text{-}CO\text{-}NH_2 \rightarrow NH_3 + HCNO \text{ (pyrolysis of urea)}$$

$$HCNO + H_2O \rightarrow NH_3 + CO_2 \text{ (hydrolysis of isocyanic acid)}$$

$$NH_2\text{-}CO\text{-}NH_2 + H_2O \rightarrow 2NH_3 + CO_2 \text{ (hydrolysis of urea)}$$

In purification of $No_x$ by the $NH_3$ component, the reaction is promoted under atmosphere containing NO and $NO_2$, each in an amount of roughly half, as in the above formula (3) (NON PATENT LITERATURE 1). However, because most of the $NO_x$ component discharged from a diesel engine is nitrogen monoxide (NO) (PATENT LITERATURE 1), there has been proposed a method to arrange an NO oxidation means in a flow passage of exhaust gas, for efficient purification of $NO_x$ to increase concentration of the $NO_2$ component in exhaust gas (PATENT LITERATURE 1, PATENT LITERATURE 2).

In addition, purification technology of soot or an SOF (they may collectively be called hereafter a "fine particle component" or PM: Particulate Matter) also influences on enhancement of fuel consumption of a diesel engine. Such a method has been practically used that a heat resistant filter (it may also be called Diesel Particulate Filter: DPF) is arranged in a flow passage of exhaust gas with which the fine particle component is filtered off. Continued deposition of the fine particle component thus filtered off on to the filter causes clogging of the filter, resulting in decrease in engine output. Accordingly, there has been investigated to reproduce the filter by combusting and removing the fine particle component deposited on the filter (PATENT LITERATURE 3, PATENT LITERATURE 4).
In a system of the PATENT LITERATURE 3 and the PATENT LITERATURE 4, the DPF is arranged at the latter part of the DOC to combust and remove the fine particle component deposited on the filter, using $NO_2$ in addition to oxygen. Because use of $NO_2$ initiates combustion of the fine particle component from low temperature, and not only promotes combustion and removal of the fine particle component but also lowers combustion temperature, it is capable of preventing melting of the filter. Among filters for collecting to combust and remove the fine particle component in this way, the DPF coated with a catalyst component is also called a CSF (Catalyzed Soot Filter).

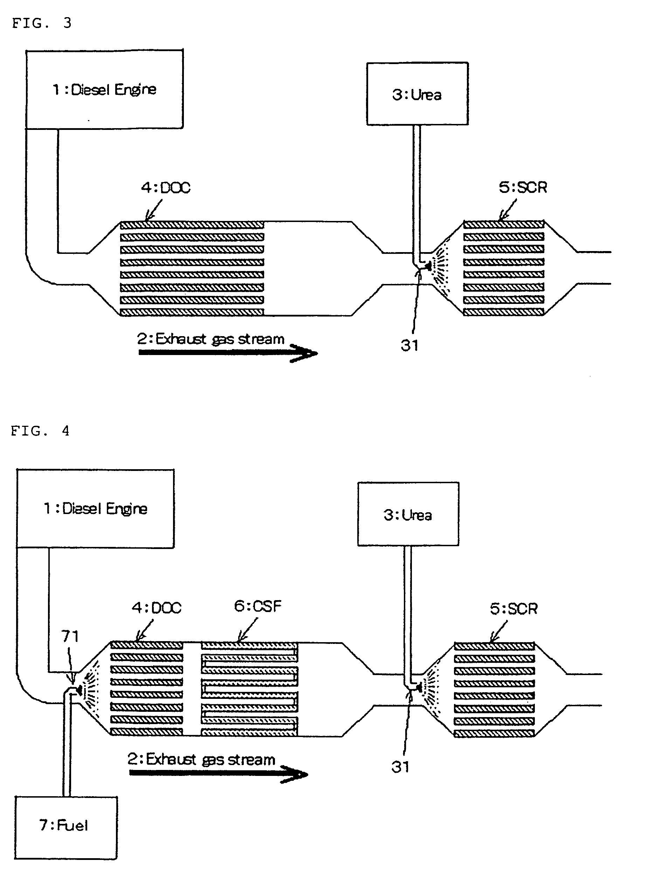

In addition, such a purification method has also been proposed that purification of $NO_x$ and combustion and removal of the fine particle component are performed simultaneously (the PATENT LITERATURE 2, the PATENT LITERATURE 4). In this method, there has been proposed a method for arranging the oxidation catalyst, a filter for filtering off the fine particle component, a supply means of an ammonia component, and the selective reduction catalyst at a flow passage of exhaust gas, in this order (refer to Fig. 4), or a method for arranging the oxidation catalyst, the supply means of an ammonia component, the selective reduction catalyst, and the filter for filtering off the fine particle component at the flow passage of exhaust gas, in this order (PATENT LITERATURE 5, PATENT LITERATURE 6). Also in these systems, the CSF, where the DPF is catalyzed to promote combustion of the fine particle component, may be used in some cases.
In such an arrangement, NO in exhaust gas is oxidized to $NO_2$ by the oxidation catalyst, and combustion and removal of the fine particle component and reductive purification of $NO_x$ can be performed simultaneously in one catalyst system. And a Pt component is described to be effective as the oxidation catalyst component of this NO (the PATENT LITERATURE 4, NON PATENT LITERATURE 4).
As such a purification method for performing purification of $NO_x$, and combustion and removal of the fine particle component at the same time, FLENDS system of Nissan Diesel Co., Ltd., or Bluetech of Daimler AG. has been developed and prevailed for an application to a diesel automobile. In addition, as the reducing component, a standardized aqueous solution of urea with a concentration of 31.8 to 33.3% by weight has been used. Such an aqueous solution of urea has been put in circulation, as a trade name of "Adblue".

In this way, purification of $NO_x$ and a purification means of the fine particle component have been proposed, however, in any of these cases, the DOC is arranged forward the SCR, to increase concentration of $NO_2$ in exhaust gas, aiming at high efficiency of $NO_x$ purification in the SCR.

CITATION LIST

PATENT LITERATURE

[PATENT LITERATURE 1]: JP-A-5-38420 (claim 1, paragraphs 0012, 0013 and 0014)
[PATENT LITERATURE 2]: JP-A-08-103636 (claim 1, paragraphs 0002, and 0012)
[PATENT LITERATURE 3]: JP-A-01-318715
[PATENT LITERATURE 4]: JP-A-2002-502927 (claim 1, paragraphs 0007 and 0008)
[PATENT LITERATURE 5]: USP No. 6823663
[PATENT LITERATURE 6]: USP No. 6928806

NON PATENT LITERATURE

[NON PATENT LITERATURE 1]: Catalysis Today, 114 (2006), 3-12, (page 2, left column)
[NON PATENT LITERATURE 2]: Detection, Origin and Effect of Ultra-Low Platinum Contamination on Diesel-SCR Catalysts), SAE International, Ford Motor Company, October/6/2008
[NON PATENT LITERATURE 3]: Impact and Prevention of Ultra-Low Contamination of Platinum Group Metals on SCR Catalysts Due to DOC Design, SAE International, Ford Motor Company, April/20/2009
[NON PATENT LITERATURE 4]: Influence of Support Materials and Aging on NO Oxidation Performance of Pt Catalysts under an Oxidative Atmosphere at Low Temperature, JOURNAL OF CHEMICAL ENGINEERING OF JAPAN, Vol. 40, (2007), No. 9, pp. 741-748

SUMMARY OF THE INVENTION

TECHNICAL PROBLEM

However, in an exhaust gas purification system where purification of $NO_x$ is intended by increasing concentration of $NO_2$ by an oxidation catalyst, and using a reducing component such as an aqueous solution of urea, there is a new problem raised as factor of fuel consumption enhancement. It is such a problem that a noble metal component used in the DOC slips to the backward SCR, incurring decrease in reduction performance of $NO_x$ in the SCR.

In the DOC, a noble metal component such as platinum (Pt) or palladium (Pd) is used aiming at oxidizing HC or CO in exhaust gas, however, as described above, the DOC also has oxidation action of NO in exhaust gas to $NO_2$. Exhaust gas containing increased amount of $NO_2$ promotes reductive purification of $NO_x$ in the backward SCR, or combustion of the fine particle component in the DPF or the CSF.
In addition, it is effective to raise temperature of exhaust gas using HC in exhaust gas in the DOC, in promoting combustion and removal of the fine particle component deposited on the DPF arranged backward the DOC. Accordingly, in the exhaust gas purification system of a diesel engine, there may be the case of supplying the HC component to the DOC to combust (oxidize) the HC component. As a method for raising temperature of exhaust gas in this way, there is a method for supplying a relatively large quantity of fuel, which is an HC component, to an engine to generate unburnt HC to supply it to the DOC, or a method for supplying fuel to the DOC by direct jetting.

As described above, a diesel engine is a combustion engine exhibiting good fuel consumption and low discharge amount of $CO_2$, however, use of fuel aiming at raising temperature of exhaust gas deteriorates fuel consumption and causes to increase discharge amount of $CO_2$. However, because temperature of exhaust gas from a diesel engine is 400°C or lower in many cases, and the exhaust gas itself has too low temperature to combust and remove the fine particle component deposited on the DPF (hereafter may be called reproduction of the DPF and the CSF), therefore, there may be the case where exhaust gas is heated at 600°C or higher to promote combustion of the fine particle component, in particular, a soot component (JP-A-2003-148141, paragraph 0012 or the like). It is desirable to raise temperature of exhaust gas to reproduce the DPF by efficiently combusting the fine particle component deposited on the DPF. However, such reproduction of the DPF requires frequent repetition thereof every time the fine particle component deposits on the DPF, thus incurring deterioration of fuel consumption. In addition, in the case where fuel for reproduction of the DPF is supplied inside a cylinder after ignition, fuel is mingled in engine oil by frequent supply of fuel, thus dilutes engine oil (Oil dilution). Generation of oil dilution decreases lubrication performance of engine oil, or increases amount of engine oil, resulting in decrease in output of an engine.

To overcome this problem, it is considered to decrease frequency of combustion and removal of the fine particle component deposited on the DPF, so as not to decrease fuel consumption as low as possible, while promoting combustion of the fine particle component. By decreasing frequency of reproduction, amount of fuel for raising temperature of exhaust gas can be decreased, and thus deterioration of fuel consumption can be prevented. However, because a large quantity of the fine particle component is deposited on the DPF by decrease in frequency of reproduction of the DPF, it becomes necessary to combust and remove a large quantity of the fine particle component at higher temperature in reproducing the DPF.
In this way, combustion and removal of the fine particle component on the DPF by raising temperature more than a conventional level enables to combust and remove a large quantity of the fine particle component at one time. However, promotion of heat generation of the DOC by a large quantity of the HC component raises a new problem of volatilization of the noble metal component in the DOC, due to exposure of the DOC for a long period of time under high temperature atmosphere such as over 700°C in diesel exhaust gas.
The noble metal component, in particular, the Pt component is oxidized, volatilizes and adheres at the surface of the SCR catalyst arranged backward the DOC, resulting in decrease in reducing performance of the catalyst (the NON PATENT LITERATURE 2, the NON PATENT LITERATURE 3). And, it has been said that influence of such a Pt component volatilized from the DOC on the SCR catalyst is particularly significant in the case of using zeolite in the SCR catalyst. In this way, in the case where activity of the SCR catalyst is decreased by the Pt component volatilized, it is necessary to increase supply amount of a reducing agent such as urea or an ammonia component. However, when a large quantity of urea or the ammonia component is supplied, the ammonia component could slip from the SCR catalyst.

Since a noble metal in a catalyst may take various states such as an oxide state, an alloy state, a composite oxide state with other metals, although volatilization mechanism of the noble metal in the catalyst is also complicated, it can be considered roughly as follows as for the Pt component and the Pd component.

The Pt component and the Pd component are oxidative active species and used in the DOC or the CSF. Melting point thereof is, in a metal state, 1554.9°C for Pd, and 1768.3°C for Pt, and thus both are high. However, in an oxide state, melting point of palladium oxide decreases to about 870°C, and melting point of platinum oxide decreases to about 450°C. Therefore, both the Pd component and the Pt component tend to easily volatilize in an oxide state, and in particular, the Pt component can be said having tendency to easily volatilize in exhaust gas, due to significant decrease in melting point.

In a diesel engine, since fuel is supplied and combusted into a cylinder with a large quantity of air, a large quantity of oxygen is included also in exhaust gas. In addition, although temperature of exhaust gas from a diesel engine is low, it may sometimes become over 700°C when the HC component is supplied to the DOC, which makes the noble metal component present in an easily oxidized and volatilized state.

Still more, since the noble metal component in the catalyst maintains large surface area by making particle diameter small, to attain enhancement of catalytic activity, the Pt component and the Pd component in the DOC are also in a state that an oxidized component tends to increase, and in particular, the Pt component in the catalyst has fear of volatilization.

With respect to suppression of such a volatilization of the noble metal component at high temperature, "Three Way Catalyst" (TWC) has already been investigated for simultaneous purification of HC, CO and $NO_x$ in exhaust gas discharged from a gasoline engine (JP-A-08-38897). In this technology, transfer of the Pt component to a vapor phase is suppressed by immersing a porous carrier in a noble metal solution to support the noble metal, and immersing the noble metal supported carrier in an organic substance solution, and performing heat treatment of this organic substance supported carrier under condition that the organic substance carbonizes.

In this conventional technology, transfer of the Pt component to a vapor phase is suppressed by three effects: anchor effect for suppressing the transfer of catalyst noble metal as a wedge, by performing heat treatment under condition where the organic substance in a catalyst raw material carbonizes so that the catalyst noble metal and the carbonized carbon slip into a gap between a porous carrier and the catalyst noble metal; effect in which the catalyst raw material is fixed stereoscopically to the porous substance by heat treatment at a high temperature of such as 700°C or higher so as to make fine pores of the porous carrier shrink; and effect for suppressing the transfer of catalyst noble metal using a base metal such as Fe, Ni, Co having superior heat resistance, as an obstacle.

However, this conventional technology cannot be said practical, because it is extremely difficult for a necessary amount of the hydrocarbon component to remain unburnt in a catalyst production step. In addition, duration of the effect for a long period of time cannot be expected, because even when necessary amount of the hydrocarbon component remained unburnt in the production step, it easily burns in contacting with high temperature exhaust gas in using the catalyst. In addition, shrinkage of the porous carrier by firing decreases specific surface area value (BET value) of the porous carrier, and deteriorates dispersing property of the noble metal component, resulting in decrease in catalyst activity. In addition, a base metal such as Fe, Ni, Co is a co-catalyst component, and is not necessarily a component to be used in all catalysts in view of catalyst designing, and in particular, Ni and Co are component predicted to have health harmfulness, and thus use thereof is not preferable in a catalyst for an automobile.

In addition, purification of $NO_x$ in the TWC is performed by the following steam reforming reaction using the Rh component in a catalyst and HC in exhaust gas. And, combined use of zirconium oxide and the Rh component promotes the steam reforming reaction (re-published patent 2000/027508, page 14)

$$HC+H_2O \text{ ------------}\rightarrow COx+H_2 \qquad (1)$$

$$H_2+NOx \text{ ----------}\rightarrow N_2+H_2O \qquad (2)$$

Such a purification of $NO_x$ in exhaust gas from a gasoline engine in TWC, and purification of $NO_x$ by processing the exhaust gas from a diesel engine with the ammonia component of a reducing agent and the SCR catalyst are fundamentally different in the reaction step thereof. Therefore, catalyst technology of a gasoline engine in the TWC cannot necessarily be used, as it is, as purification technology of $NO_x$ of a diesel engine.

In addition, to suppress volatilization of the noble metal component from the DOC, it may also be considered not to use the Pt component as the noble metal component. However, when the Pt component is not used, there may be the case where concentration of $NO_2$ in exhaust gas decreases and sufficient reductive purification of $NO_x$ in the SCR cannot be obtained, and decrease in concentration of $NO_2$ deteriorates also reproduction efficiency of the DPF and the CSF.

In addition, as a method for eliminating decrease in SCR performance caused by the noble metal component which volatilizes from the DOC, it may be considered to use the SCR catalyst component, for example, vanadium oxide, as a main component, which has durability against contamination by the noble metal, and is capable of maintaining high purification performance of $NO_x$. However, vanadium is not desirable in an automotive application, because of being a harmful heavy metal.

In the SCR, various kinds of zeolite have been used widely, however, zeolite decreases SCR performance significantly due to contamination by the noble metal.

In this way, it has been desired a practical catalyst apparatus which does not incur decrease in $NO_x$ purification performance even at high temperature, in a catalyst apparatus arranged with the SCR backward the DOC, in a stream of exhaust gas of lean-burn engine represented by a diesel engine.

SOLUTION TO PROBLEM

The present inventors have intensively studied a way to solve the above-described conventional technical problems, and discovered that, by arranging a structure for adsorbing the noble metal component volatilizing from the DOC, as a trap means (hereafter may also be referred to as trap) at the upstream of the SCR catalyst, in the exhaust gas purification apparatus, where the SCR catalyst is arranged backward the DOC, and a supply means of an ammonia component, as a reducing component, is arranged between the DOC and the SCR catalyst, purification performance of $NO_x$ in the SCR catalyst can be maintained, and also the reducing component can be utilized effectively, even in a state that exhaust gas in the DOC becomes significantly high temperature, and have thus completed the present invention.

That is, according to a first aspect of the present invention, there is provided an exhaust gas purification catalyst apparatus arranged with an oxidation catalyst (DOC) having a noble metal component for oxidizing a nitrogen oxide (NO) in exhaust gas discharged from a diesel engine, a reducing agent spraying means for supplying a reducing agent selected from an urea component or an ammonia component, and a selective reduction catalyst (SCR) for reducing the nitrogen oxide ($NO_x$) by making contacted with the reducing agent, in this order from the upstream side of a flow passage of exhaust gas, characterized in that: the selective reduction catalyst (SCR) does not comprise the noble metal component and comprises zeolite or a crystal metal aluminophosphate; and further a trap means for collecting the noble metal component volatilized from the oxidation catalyst (DOC) is arranged between the oxidation catalyst (DOC) and the selective reduction catalyst (SCR).

In addition, according to a second aspect of the present invention, there is provided, the exhaust gas purification catalyst apparatus, characterized in that, in the first aspect, the trap means is a linear material made of a metal, or a honeycomb structure made of a metal or cordierite.

In addition, according to a third aspect of the present invention, there is provided the exhaust gas purification catalyst apparatus, characterized in that, in the first aspect, the selective reduction catalyst (SCR) comprises $\beta$-type zeolite and does not comprise a vanadium component.

In addition, according to a fourth aspect of the present invention, there is provided the exhaust gas purification catalyst apparatus, characterized in that, in the first aspect, the oxidation catalyst (DOC) supports a platinum component, as the noble metal component, on a one-piece structure type substrate.

In addition, according to a fifth aspect of the present invention, there is provided the exhaust gas purification catalyst apparatus, characterized in that, in the fourth aspect, platinum in the noble metal component is in an amount of 10% by weight or higher, in metal equivalent, and the supporting amount is 0.1 to 10 g/L, in metal equivalent, per volume of the one-piece structure type substrate.

In addition, according to a sixth aspect of the present invention, there is provided the exhaust gas purification catalyst apparatus, characterized in that, in the fourth or fifth aspect the one-piece structure type substrate is a flow-through, type honeycomb structure, or a wall-flow type honeycomb structure.

In addition, according to a seventh aspect of the present invention, there is provided the exhaust gas purification catalyst apparatus, characterized by, in the fourth or the fifth aspect, further arranging a filter (DPF) for collecting a fine particle component in exhaust gas, or a catalyzed filter (CSF) for collecting the fine particle component to combust and remove it by catalytic action.

In addition, according to an eighth aspect of the present invention, there is provided the exhaust gas purification catalyst apparatus, characterized by, in the seventh aspect, arranging a trap means for collecting the noble metal component, a reducing agent spraying means, a selective reduction catalyst (SCR) for reducing the nitrogen oxide ($NO_x$) by making contacted with the reducing agent, at the downstream of the catalyzed filter (CSF), as well as arranging the catalyzed filter (CSF) for collecting the fine particle component to combust and remove it, at the downstream of the oxidation catalyst (DOC) comprising a noble metal component for oxidizing a nitrogen oxide (NO) in exhaust gas.

In addition, according to a ninth aspect of the present invention there is provided, the exhaust gas purification catalyst apparatus, characterized in that, in the eighth aspect, the catalyzed filter (CSF) is a wall-flow type honeycomb structure coated with a catalyst composition comprising a platinum component as the noble metal component, and amount of platinum component in the noble metal is 10% by weight or higher, in metal equivalent, and amount of the noble metal component in the coated catalyst composition is 0.1 to 10 g/L, in metal equivalent, per volume of the honeycomb structure.

Still more, according to a tenth aspect of the present invention, there is provided a diesel automobile mounted with the exhaust gas purification catalyst apparatus according to any one of the first to the ninth aspects.

In addition, according to an eleventh aspect of the present invention there is provided a method for exhaust gas purification, characterized, in the exhaust gas purification catalyst apparatus in any of the first to the ninth aspects, by flowing through exhaust gas discharged from a diesel engine, oxidizing the nitrogen oxide (NO) in exhaust gas with the oxidation catalyst (DOC), and then supplying from the reducing agent spraying means the reducing agent selected from the urea component or the ammonia component to reduce the nitrogen oxide ($NO_x$) by making contacted with the selective reduction catalyst (SCR), as well as collect the noble metal component volatilized from the oxidation catalyst (DOC) using the trap means.

In addition, according to a twelfth aspect of the present invention, there is provided the method for exhaust gas purification, characterized by, in the eleventh aspect, supplying a hydrocarbon component to forward of the oxidation catalyst (DOC), and heating exhaust gas by a noble metal component to combust and remove a fine particle component in exhaust gas at backward of the oxidation catalyst (DOC).

In addition, according to a thirteenth aspect of the present invention, there is provided the method for exhaust gas purification, characterized by, in the eleventh or twelfth aspect, adjusting molar fraction ($NO/NO_2$) of nitrogen monoxide /nitrogen dioxide in exhaust gas at 1/2 to 2/1, by the oxidation catalyst (DOC).

Still more, according to a fourteenth aspect of the present invention, there is provided the method for exhaust gas purification, characterized in that, in twelfth aspect, heating temperature of exhaust gas backward the oxidation catalyst (DOC) is 700°C or higher.

ADVANTAGEOUS EFFECTS OF INVENTION

According to the present invention, because of arrangement of the trap means for collecting the noble metal component, at the upstream of the SCR, in the exhaust gas purification catalyst apparatus, having arrangement of the oxidation catalyst (DOC) in a stream of exhaust gas from a diesel engine, and arrangement of the selective reduction catalyst (SCR) at backward of the DOC, a component volatilizing from the DOC can be collected and purification of $NO_x$ can be performed stably for a long period of time, even under condition where the DOC becomes significantly high temperature.

In addition, because the noble metal component can be collected by the trap means, even depositing a large quantity of the fine particle component on a filter and burning it all at once, purification performance of NOx in the SCR can be maintained for a long period of time, even in performing control for aiming at enhancement of fuel consumption in a diesel engine by reproducing a filter using small amount of fuel.

Here, in the case where the trap means is arranged between the DOC and the SCR, the trap means becomes to have oxidation capability by the noble metal component trapped, however, by arrangement of the trap means at more forward than a supply site of a reducing component, the ammonia component, which is a reducing component, is not oxidized, and decrease in denitrification performance in the SCR catalyst is not incurred.

In addition, by making the trap means a "honeycomb structure having a plurality of through holes with both ends open" (flow-through type honeycomb), the noble metal component can be collected efficiently by utilizing wide surface area, without increasing backpressure of exhaust gas, thus decrease in activity of the SCR catalyst can be prevented without incurring decrease in engine output.

BRIEF DESCRIPTION OF DRAWINGS

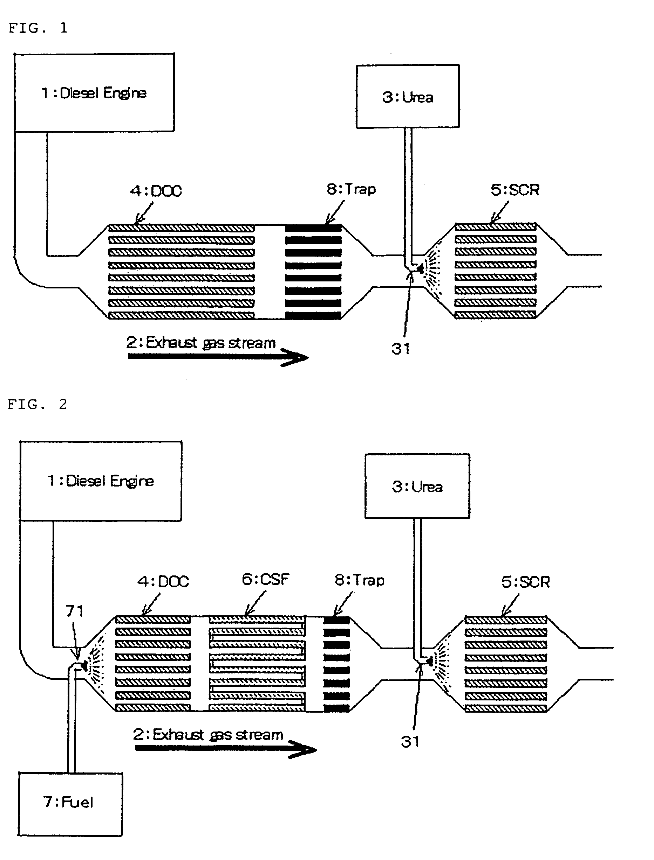

Fig. 1 is an explanation drawing showing schematically a configuration arranged with an oxidation catalyst (DOC), a trap means for collecting a noble metal component, a reducing agent spraying means, and a selective reduction catalyst (SCR), in this order, in an exhaust gas purification catalyst apparatus of the present invention.

Fig. 2 is an explanation drawing, where a catalyzed filter (CSF) for collecting the fine particle component to combust and remove it is further arranged, in Fig. 1 of an exhaust gas purification catalyst apparatus of the present invention.

Fig. 3 is an explanation drawing showing schematically a conventional exhaust gas purification catalyst apparatus not arranged with a trap means for collecting a noble metal component, as compared with Fig. 1.

Fig. 4 is an explanation drawing showing schematically a conventional exhaust gas purification catalyst apparatus not arranged with a trap means for collecting a noble metal component, as compared with Fig. 2.

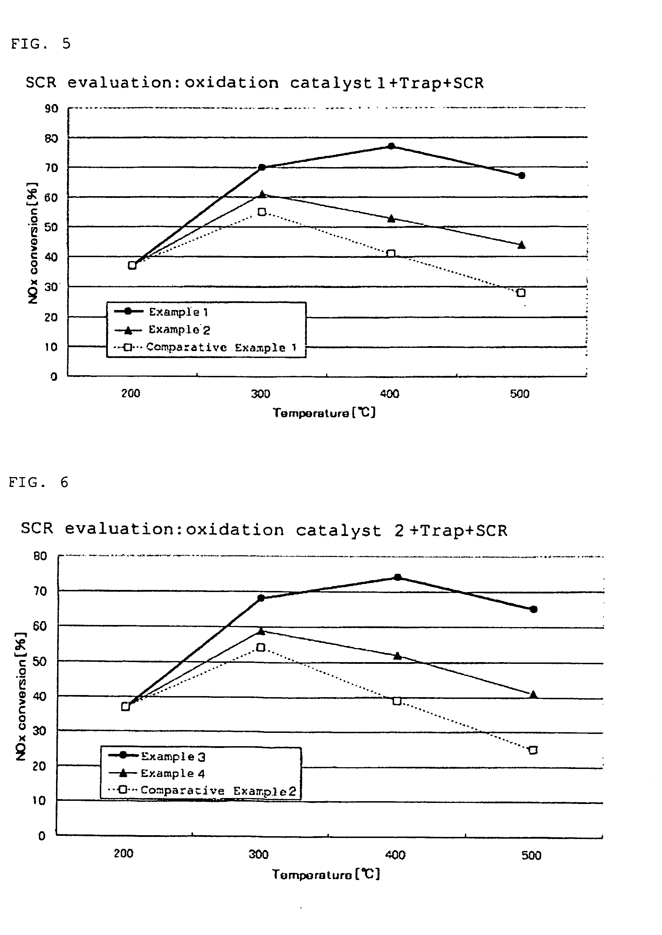

Fig. 5 is a graph for comparing with a conventional apparatus, by measuring an SCR catalyst performance ($NO_x$ reduction rate) by spraying urea at 200 to 500°C, using an oxidation catalyst (DOC) based on Pt and Pd, in the exhaust gas purification catalyst apparatus of the present invention shown in Fig. 1.

Fig. 6 is a graph for comparing with a conventional apparatus, by measuring an SCR catalyst performance ($NO_x$ reduction rate) by spraying urea at 200 to 500°C, using an oxidation catalyst (DOC) based on Pt, in the exhaust gas purification catalyst apparatus of the present invention shown in Fig. 1.

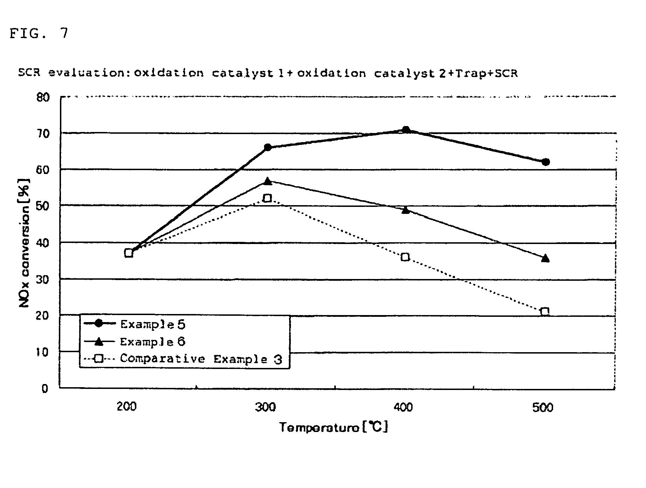

Fig. 7 is a graph for comparing with a conventional apparatus, by measuring an SCR catalyst performance ($NO_x$ reduction rate) by spraying urea at 200 to 500°C, using an oxidation catalyst (DOC) based on Pt and Pd, and an oxidation catalyst (DOC) based on Pt, in the exhaust gas purification catalyst apparatus of the present invention shown in Fig. 1.

DESCRIPTION OF EMBODIMENTS

Description will be given below in detail mainly on the case of adopting the present invention to an application of a diesel automobile, however, it needles to say that the present invention is effective also to a diesel engine to be used in various power sources of power generation or the like.

I [An exhaust gas purification catalyst apparatus]

In the exhaust gas purification catalyst apparatus of the present invention (hereafter, it may also be referred to simply as a catalyst apparatus), the DOC, the trap means, the SCR, the supply means of a reducing component are essential configuration elements. The catalyst apparatus of the present invention, aims at suppressing slip of the noble metal component from the DOC to the SCR, and preventing decrease in performance of the $NO_x$ reducing catalyst in the SCR arranged backward the DOC, even when the DOC is exposed at high temperature in exhaust gas stream, in the catalyst apparatus where the supply means of a reducing component is installed backward the DOC in exhaust gas stream, and the SCR is arranged backward this supply means, as shown in Fig. 1.

(DOC+SCR)

In a truck or the like, for example, for carrying an ore at a mine, there is the case where an exhaust gas purification catalyst apparatus with a layout of (DOS+SCR) as shown in Fig. 3 is applied. In this case, because the mine has an environment of low population density, there may the case where discharge regulations for the fine particle component are not placed.

In addition, in recent years, supply technology of fuel to a diesel engine has been progressed and a fuel supply system called a common-rail has now been generalized. The common-rail is the one for supplying fuel into a cylinder under control of an injector, by applying high pressure to fuel in advance. Therefore, control of fuel jetting is easy and such a control as to little generate the fine particle component is also possible. In addition, in the common-rail, there is tendency of ever increasing pressure supplied to fuel, and fuel which is jetted from higher pressure becomes still more fine, which provides more easy combustion and decreases generation amount of the fine particle component. In this way, in the future, in the case where generation amount of the fine particle component will become further low, there is high possibility of clearing a regulation value for the fine particle component even without using a filter, and it is also easily predicted that an automobile not mounted with a filter can run even in a urban area.

Owing to technological progress of a common-rail or the like, or improvement of combustion control, decrease in discharge amount of $NO_x$ is becoming possible, however, suppression of discharged amount of $NO_x$ is more difficult than the case of the fine particle component, in many cases.

Generation of $NO_x$ largely depends on temperature inside an engine cylinder in combustion, or amount of a reducing component (oxygen concentration) in mixed air composed of air and fuel. As for temperature inside the cylinder, as a method for decreasing temperature of air taken-in a cylinder, an inter cooler has been practically used.

In addition, as for adjustment of the amount of the reducing component, an EGR (exhaust gas Recirculation) system has been practically used.

In a diesel engine, there is the case where increase in concentration of oxygen supplied inside a cylinder increases generation amount of $NO_x$. Therefore, it is considered to suppress generation amount of $NO_x$ by decreasing concentration of oxygen supplied inside the cylinder, and the one to be used for this object is the EGR. The EGR aims at suppressing generation amount of $NO_x$ by supplying exhaust gas, in which once burnt and concentration of oxygen have decreased, again to an engine.

In this way, reduction of $NO_x$ by using the inter cooler or the EGR has also been investigated, however, because of operation of a diesel engine in a lean-burn state, it is difficult to suppress discharge amount of $NO_x$ down to a regulation value only by such a means at present. It is similar also in the case of using the common-rail.

On the other hand, combustion control called HCCI (Homogeneous-Charge Compression Ignition) is also viewed promising as exhaust gas purification technology. HCCI is an engine having such a mechanism that intakes uniformly mixed vapor of fuel and air, in a state of limit of inflammation in spark ignition or lower, to attain compressed self-ignition, and in a diesel engine, decreasing effect of the fine particle component or $NO_x$ is expected, by combination of multi-jetting, where fuel is jetted a plurality of times under high pressure by pilot jetting, pre-jetting, main jetting, after hetting and post jetting. However, this HCCI also has a problem of difficulty in direct control of ignition timing, and thus has not yet been practically used. And, even if the HCCI will be used practically, technology is still necessary to enable purification of $NO_x$ and removal of the fine particle component by a method other than combustion control, because in a diesel engine, lean-burn is performed, as well as light oil is used which easily generates the fine particle component. As compared with an exhaust gas purification catalyst apparatus not using the DPF by making free use of these technologies, the exhaust gas purification catalyst apparatus of the present invention is incorporated with a trap, as shown in Fig. 1.

It should be noted that, in the case of a diesel engine automobile, temperature of exhaust gas varies largely depending on an engine size or an operation state. In particular, in the case of a compact type diesel engine, operation may sometimes be performed in very high engine rotation number. Because in a state of high rotation number of an engine, temperature of exhaust gas also increases, there is high risk of volatilization of the noble metal from the DOC, even when the DPF is not reproduced. Therefore, as described in explanation of conventional technology, a layout of DOC+SCR+DPF, DOC+SCR+CSF, DOC+DPF+SCR, or DOC+CSF+SCR has been investigated.

The exhaust gas purification catalyst apparatus of the present invention, as shown in Fig. 2, adopts a layout of DOC+CSF+Trap+Injection+SCR, DOC+Injection+Trap+SCR+DPF, or DOC+Injection+Trap+SCR+CSF, by arranging the filter backward the DOC, therefore exhibits superior performance in both of reproduction of the filter and maintaining of SCR performance. In this case, "Injection" means a reducing agent spraying means.

[DOC: oxidation catalyst]

The DOC to be used in the present invention is an oxidation catalyst containing a noble metal component for oxidizing HC or CO in exhaust gas. As the noble metal component, it is desirable to contain a platinum component, and a palladium component can be used in combination, as needed. Such a noble metal component is supported on an inorganic oxide base material, mixed with other catalyst components, as needed, and coated onto a structure type substrate, as a catalyst composition. As the inorganic oxide to be used as a base material for supporting the noble metal component in this way, known catalyst materials in the field of an exhaust gas purification catalyst, can be used. It is preferable that such a catalyst material is a porous inorganic oxide having high heat resistance, large specific surface area value thus enabling stable and high dispersion of the noble metal component.

The porous inorganic oxide is selectable as appropriate among known inorganic oxides. Specifically, various alumina, zirconia, ceria, silica, silica-alumina, titania, zeolite or the like can be used. These main components may be used alone or by mixing two or more kinds, or as a composite oxide of two or more kinds. In addition, a base material used alone or by mixing, or as a composite oxide in this way, may be a pure metal oxide, however, other element may be added to adjust heat resistance or catalytic activity. Such an additive includes various kinds of rare-earth metal components, and various kinds of transition metal components, and each may be added alone or added in combination of two or more kinds.

Among these inorganic oxides, alumina is preferable in the present invention. Alumina includes $\gamma$-alumina, $\beta$-alumina, 5-alumina, $\eta$-alumina, and $\theta$-alumina, and among them, $\gamma$-alumina is preferable. And, in the case of $\gamma$-$Al_2O_3$, lanthanum-added $\gamma$-$Al_2O_3$ is preferable. Lanthanum-added $\gamma$-alumina is superior in heat resistance, and in the case where the noble metal component such as the Pt component and the Pd component is supported thereon, it is possible to maintain high catalytic activity even at high temperature (JP-A-2004-290827). Specific surface area value (measured by the BET method; the same hereafter) of such $\gamma$-$Al_2O_3$, or lanthanum-added $\gamma$-$Al_2O_3$ is preferably 80 to 250 $m^2$/g, and still more preferably 200 to 250 $m^2$/g. The specific surface area value of $\gamma$-alumina of 250 $m^2$/g or smaller provides good heat resistance of the catalyst, and is capable of stabilizing a dispersed state of the noble metal component, while the value of 80 $m^2$/g or higher is capable of highly dispersing the noble metal component.

[One-piece structure type substrate]

As the DOC of the present invention, the one-piece structure type substrate such as a honeycomb structure type substrate is used. The honeycomb structure type substrate is a honeycomb-shaped structure accumulated with many through holes. As a material of such a honeycomb structure type substrate, stainless steel, silica, alumina, silicon carbide, cordierite or the like may be used, however, a honeycomb structure type substrate made of any of these materials may also be used in the present invention.

To prepare a catalyst from the honeycomb structure type substrate to be used in the present invention, any of an impregnation method and a wash-coat method can be used. In the case of the impregnation method, because of preparation of a honeycomb structure type catalyst by impregnation the catalyst component in a porous structure, cross-sectional area of the through holes of the honeycomb is not decreased and backpressure is not raised, however, there may be the case where the catalyst component enters inside the structure, and the catalyst component thus entered inside the structure is not used in purification of exhaust gas. On the contrary, in the wash-coat method, because the catalyst composition is coated on the surface of the through holes, it can be used under advantageous condition for activity. It is desirable that a honeycomb structure type catalyst to be used in the catalyst of the present invention is prepared by the wash-coat method.

It is desirable that, in an application to the DOC and the SCR, a flow-through type honeycomb structure where the through-holes having both ends open are accumulated in honeycomb shape is used, as such a honeycomb structure type substrate. In addition, it is desirable, for the CSF, to use a wall-flow type honeycomb structure where through-holes are accumulated in honeycomb shape having one side of the opening of the through-holes open, and the other side closed. In such a honeycomb structure type catalyst, one honeycomb structure may be coated with a catalyst composition exclusive for each honeycomb structure type catalyst.

Such a honeycomb structure is selectable among known honeycomb structure type substrates, and whole shape is also arbitrary, and selectable as appropriate in response to a structure of an exhaustion system to be applied, such as a column type, a square pole type, a hexagonal cylinder type. Still more, hole number of the opening part is decided suitably in consideration of kind of exhaust gas to be processed, gas flow amount, pressure loss or removal efficiency, however, in an application for exhaust gas purification of a diesel automobile, usually it is preferably about 100 to 1500 pieces, and more preferably 100 to 900 per square inch (6.45 $cm^2$). The cell density per square inch (6.45 $cm^2$) of 10 or more is able to secure contact area between exhaust gas and the catalyst, providing sufficient purification function of exhaust gas, while the cell density per square inch (6.45 $cm^2$) of 1500 or less does not generate significant pressure loss of exhaust gas, and does not impair performance of an internal combustion engine.

In addition, thickness of the cell wall of the honeycomb structure type substrate is preferably 2 to 12 mil (milli-inch) (0.05 to 0.3 mm) and more preferably 3 to 8 mil (0.076 to 0.2 mm).

(Function of DOC)

In the exhaust gas purification catalyst apparatus of the present invention, the DOC, containing the Pt component as an essential component, is used. Most of $NO_x$ contained in exhaust gas from an engine is NO. In a conventional exhaust gas purification catalyst apparatus shown in Fig. 3, it has been said desirable to convert suitable ratio of NO to $NO_2$, so as to promote $NO_x$ purification in the SCR catalyst. This ratio of NO: $NO_2$ has been about 1: 1 in molar ratio, in the SCR catalyst having zeolite such as Fe-β or MFI as a main component.

Also in the exhaust gas purification catalyst apparatus of the present invention, the DOC is arranged forward the SCR catalyst to oxidize NO to $NO_2$ and increase concentration of $NO_2$ in $NO_x$. The noble metal component has higher such NO oxidation performance than a transition metal, and the Pt component is superior to a Pd component (JP-A-2009-167844, paragraph [0021], JP-B-2008-526509, paragraph [0005], JP-A-2008-155204, paragraph [0006], NON PATENT LITERATURE 4 (JOURNAL OF CHEMICAL ENGINEERING OF JAPAN, Vol. 40, (2007), No. 9, pp. 741-748 or the like).

Since light oil or heavy oil, which is fuel of a diesel engine, contains a sulfur component, the Pd component is poisoned easily by the sulfur component, which is deactivated during use for a long period of time. Therefore, in the present invention, it is preferable to use the Pt component in combination, in the case of using the Pd component in the DOC.

In the present invention, it is preferable that platinum in the noble metal component of the DOC is 10% by weight or higher, in metal equivalent, and the supporting amount of the noble metal component is 0.1 to 10 g/L, in metal equivalent, per volume of the one-piece structure type substrate. Content of the Pt component is more preferably 0.1 to 5 g/L, and particularly preferably 0.1 to 3 g/L. Too low amount of the Pt component does not provide sufficient NO oxidation performance, while also too high amount of the Pt component not only provides enhancement of NO oxidation performance comparable to use amount but also increases volatilization amount of the Pt component, which may provide the case where sufficient collection of the Pt component becomes difficult, unless the trap means is made large, in some cases.

(Pt component and Pd component)

Use of only Pd as the noble metal component may also be possible to suppress amount of the noble metal component which volatilizes from the DOC. However, it is difficult to obtain sufficient NO oxidation performance only by the Pd component. Therefore, in the exhaust gas purification catalyst apparatus of the present invention, it is preferable that the DOC contains the Pd component together with the Pt component as essential components. The addition of the Pd component decreases use amount of the expensive Pt component and is thus capable of providing an advantageous catalyst in view of cost.

In addition, the noble metal component in a catalyst, as described above, is predicted to be oxidized at least at the surface thereof in exhaust gas. Pd oxide has high melting point and is more difficult to volatilize as compared with Pt oxide. It is preferable to use the Pd component in addition to the Pt component, also from the view point that the Pd component, which is difficult to volatilize, has action of adsorbing the Pt component volatilized, or action of suppressing volatilization of Pt, by making an alloy of the Pt component and the Pd component.

In the case where the DOC contains the Pd component together with the Pt component as the noble metal component, amount of the platinum component in the noble metal component is preferably 10% by weight or higher, in metal equivalent, and more preferably 30% by weight or higher. Too low amount of the Pt component does not provide sufficient NO oxidation performance, and heat generation capability of exhaust gas, while too high amount of the Pt component increases volatilization amount of the Pt component, which may sometimes requires to increase capacity of the backward trap not containing the noble metal component.

The present invention can be expected to exhibit significant action effect in the case where average particle diameter of the noble metal in the oxidation catalyst (DOC) is as small as below 4 nm. It is because the oxidation catalyst (DOC) having such a small average particle diameter of the noble metal provides easy volatilization of the noble metal component, when exposed to high temperature for a long period of time.

[SCR catalyst: selective reduction catalyst]

The SCR catalyst to be used in the exhaust gas purification catalyst apparatus of the present invention performs reductive purification of $NO_x$ in exhaust gas using urea or ammonia as a reducing agent. A material of the SCR catalyst includes zeolite or vanadium oxide or the like, however, in an automobile application, it is desirable not to contain a harmful heavy metal component such as vanadium or the like.

Zeolite is a general term of an aluminosilicate salt having fine pores in the crystal, which is capable of selectively taking-in a molecule inside the pore thereof to promote a reaction. Such zeolite has superior reductive purification performance of $NO_x$ as the SCR material, however, is significantly made to decrease reductive purification performance of $NO_x$ when contaminated by the noble metal. On the other hand, according to the present invention, contamination of zeolite by the noble metal component derived from the DOC is prevented, and superior reductive purification performance of $NO_x$ as the SCR catalyst can be exerted stably for a long period of time.

It is preferable that the SCR catalyst is the one-piece structure type substrate such as a flow-through type honeycomb structure, or a wall-flow type honeycomb structure or the like.

(Types of zeolite)

In the present invention, zeolite is not especially limited, however, it may be selected as appropriate among Y-type, β-type, MFI-type, CHA-type, USY-type, SUZ-type, MCM-type, PSH-type, SSZ-type, ERB-type, ITQ-type, mordenite, and ferriorite. In addition, as a material of the SCR catalyst providing similar action to zeolite, a crystal metal aluminophosphate, having a similar porous structure or a layer structure, is included (JP-A-60-86011). As such a crystal metal aluminophosphate, crystal aluminaphosphate (ALPO), or crystal silicoaluminophosphate (SAPO) has been known, which has been investigated also as the material of the SCR catalyst (US2008/0241060). Such zeolite and the compound similar to zeolite may be used alone, or two or more kinds of materials may be mixed, or a plurality of materials may be coated onto the surface of a structure type substrate by making a multi-layer. In addition, such zeolite and the compound similar to zeolite may be the one where a transition metal component such as iron or copper, or a rare-earth component such as cerium or lanthanide is ion-exchanged at a cation side thereof.

Among such zeolite and the compounds similar to zeolite, it is preferable to use β-type zeolite as the SCR catalyst material in the present invention. β-type Zeolite has a relatively complicated three-dimensional pore structure composed of linear pores having relatively large diameter, aligned in one direction, and curved pores crossing with them, and has a property that diffusion of cations and gas molecules such as $NH_3$ and the like in ion exchange are easy, and superior in reactivity and heat resistance.

In addition, zeolite has an acid point to which a basic compound such as $NH_3$ can adsorb, and number of the acid point differs in response to Si/Al ratio thereof. Generally, zeolite having low Si/Al ratio has more number of the acid point, however, deterioration degree is large in durability under the co-presence of steam, while on the contrary, zeolite having high Si/Al ratio is superior in heat resistance but has less acid points. In a $NH_3$ selective reduction catalyst, because $NH_3$ adsorbs at the acid point of zeolite, which becomes activated point to reductively remove a nitrogen oxide such as $NO_2$, zeolite having more acid points (low Si/Al ratio) is advantageous in view of a denitrification reaction. In this way, as for the Si/Al ratio, there is trade off relation between durability and activity, and thus in consideration of this point, the Si/Al ratio of zeolite is preferably 5 to 500, more preferably 10 to 100, and still more preferably 15 to 50. β-type zeolite suitable for the SCR catalyst and the MFI-type zeolite similarly have such characteristics.

(β-Type zeolite)

It is preferable to use β-type zeolite having an iron element or a copper element ion-exchanged at a cation site of zeolite, as the SCR catalyst material in the present invention. In addition, iron oxide may be contained, as an iron component, in zeolite having an iron element ion-exchanged. It is preferable that zeolite containing an iron element or a copper element in this way is included as a main component, because of high rate of $NH_3$ adsorption and elimination, and also high activity as the SCR. Here, the main component means to be 50% by weight or higher in total zeolite amount to be used in a catalyst composition coated on a carrier of the SCR catalyst.

β-Type zeolite has a three-dimensional fine pore structure as described above, which makes easy diffusion of cations and gas molecules such as $NH_3$ in ion exchange. In addition, as compared with mordenite, faujasite and the like, which have only linear vacant holes aligned in one direction, such a structure is a unique structure and a complicated vacant hole structure, therefore, β-zeolite gives high stability of little structural fracture caused by heat, and is an effective material as an automotive catalyst.

(β-Type zeolite added with an iron element)

Generally, in zeolite, a cation as a counter ion is present, as a solid acid point. As the cation, an ammonium ion or a proton is general, however, β-type zeolite added with an iron element as a cation specie (hereafter may be referred to as "Fe-β") is preferable. Reason for enhancement of SCR performance by Fe-β is not certain, however, it is considered that a skeleton structure of zeolite is stabilized, heat resistance is enhanced and NO is oxidized to $NO_2$ at the surface of zeolite, which enhances reaction activity with $NH_3$. The addition amount of an ion-exchanging specie for zeolite is preferably 0.01 to 5% by weight as iron (in $Fe_2O_3$ equivalent), and more preferably 0.2 to 2.0% by weight. The amount of the iron element over 5% by weight cannot secure number of active solid acid points and not only decreases activity and also decreases heat resistance, while the amount below 0.01% by weight cannot provide sufficient $NO_x$ purification performance, and decreases purification performance of exhaust gas, and thus it is not preferable. It should be noted that all of iron elements added as the ion-exchange specie may be ion-exchanged or excess iron elements may be supported on zeolite in an iron oxide state.

A ratio of β-type zeolite ion-exchanged with the iron element is preferably expressed by the following formula (4), based on the fact that one iron element (ion) and the above two $[AlO_{4/2}]$ units, which is a mono-valent ion-exchange site in zeolite, forms an ion pair:

$$[\text{mol number of an iron ion contained by ion-exchange, in unit weight of zeolite}/\{(\text{mol number of } Al_2O_3 \text{ present in unit weight of zeolite}) \times (1/2)\}] \times 100 \text{ --- (4)}$$

The ion exchange rate is preferably 10 to 100%, more preferably 12 to 92% and still more preferably 30 to 70%. The ion exchange ratio of 92% or lower stabilizes more a skeleton structure of zeolite, enhances heat resistance of the catalyst, and hence life-time of the catalyst, thus providing more stable catalytic activity. However, the too low ion exchange rate such as below 10% may not provide sufficient denitrification performance in some cases. It should be noted that the case where the ion-exchange rate is 100% means that all of the cation species in zeolite has been ion-exchanged with the iron ion. In this way, ion-exchanged zeolite exerts superior purification performance.

It should be noted that zeolite or the crystal metal aluminophosphate is used as the SCR catalyst of the present invention, however, it may be used in combination with a hydrolyzed component of urea or a binder component, an occlusion component of $NO_x$, an adsorption component of $NO_x$, and other decomposition components of $NO_x$, or the like, other than such a zeolite or the crystal metal aluminophosphate.

(Relation between the DOC and the SCR catalyst)

Zeolite exerts superior reductive purification performance of $NO_x$, however, as described above, there is the case where activity is significantly decreased when contaminated by the noble metal component such as Pt. However, by combined use with one or more traps, like in the present invention, contamination of the SCR catalyst by the noble metal component can be prevented, and high reductive purification performance of $NO_x$ in the SCR catalyst can be maintained, by utilization of $NO_2$ formed by the DOC.

Among the catalysts using zeolite or the compound similar to zeolite, there is also the one containing the noble metal component such as the Pt component. Zeolite or the compound similar to zeolite containing the noble metal component has been investigated aiming at adsorbing an oxygen atom of $NO_x$, or aiming at oxidizing $NH_3$ slipping in utilizing the $NH_3$ component as a reducing component, however, the noble metal component oxidizes even the $NH_3$ component necessary in denitrification, and causes to decrease reductive purification performance of $NO_x$, in many cases. Therefore, in the catalyst apparatus of the present invention, it is designed so that the platinum component and the palladium component are not contained in the SCR catalyst arranged backward the DOC.

However, a catalyst arranged backward the SCR is not especially limited, and for example, a catalyst containing the noble metal component together with the SCR component may be arranged. Description was made above on relation between the DOC and the SCR catalyst, however, it can be considered similarly in the case where the DOC is the CSF.

[Reducing agent spraying means]

In the exhaust gas purification catalyst apparatus of the present invention, the reducing agent spraying means (Injection) is the one for supplying a reducing agent selected from a urea component or an ammonia component, and is usually configured by a storage tank and a pipeline of the reducing agent, and a spray nozzle attached at the tip thereof. Position of the reducing agent spraying means is backward the oxidation catalyst (DOC), forward the selective reduction catalyst (SCR) for reducing a nitrogen oxide ($NO_x$) by contacting with a reducing agent, or may be any of forward or backward the trap means for collecting the noble metal component. However, as shown in Fig. 1, it is preferably arranged backward the trap means.

Kind of the reducing component is selected from a urea component or an ammonia component. As the urea component, a standardized aqueous solution of urea with a concentration of 31.8 to 33.3% by weight, for example, a trade name of "Adblue", can be used, and in addition, in case of the ammonia component, ammonia gas other than ammonia water may be used. However, because $NH_3$ itself, which is a reducing component, has harmful property such as irritating odor, such a system is preferable that by adding urea water from the upstream of a denitrification catalyst, and generating $NH_3$ by pyrolysis or hydrolysis, this is made acted as a reducing agent, rather than using $NH_3$ as it is as a reducing agent.

[Trap means]

In the exhaust gas purification catalyst apparatus of the present invention, the trap means is the one for collecting the noble metal component diffused from the oxidation catalyst (DOC) containing the noble metal component. A material and shape of the trap means are not especially limited, however, it is preferably a linear material made of a metal, or a honeycomb structure made of a metal or cordierite. The linear material made of a metal includes specifically a stainless curl or the like. The stainless curl means a linear material prepared by winding stainless fine wires in a whirl.

In the trap to be used in the present invention, the one made by arranging in order linear materials like stainless curl has been known as a stainless scrubbing brush. In the case of using the stainless curl in the present invention, it may be arranged in a flow passage of exhaust gas by putting it in a container of a wire-gauze or the like.

Among the honeycomb structures, a flow-through type honeycomb structure has large surface area and thus does not incur significant increase in backpressure, and thus does not incur decrease in output of an engine. A material of such a flow-through type honeycomb structure is not especially limited, as long as being a material not containing the noble metal component, and may be the one using one or more kinds of a heat resistant inorganic oxide such as cordierite, alumina, silica, titania, ceria, zeolite, zirconia, or the one made of a metal such as stainless steel or the like.

The trap is preferably a flow-through type honeycomb structure made of cordierite, among flow-through type honeycomb structure bodies made of ceramics. The reason for that is as follows:

That is, cordierite to be used in the honeycomb has a BET value thereof of several tens $m^2/g$ or less (JP-A-62-004441), significantly smaller value as compared with a BET value of 100 to 200 $m^2/g$ of a material to be used in a general exhaust gas purification catalyst. A material having such a small BET value tends to decrease dispersion degree of the Pt component. The Pt component having small dispersion degree has large particle diameter and small surface area. The Pt component having small surface area is hard to increase ratio of an oxide even in diesel exhaust gas having high oxygen concentration at high temperature, and thus is capable of preventing poisoning of the SCR by re-volatilization of once trapped Pt component.

Although an index of such a BTE value is not adaptable to the flow-through type honeycomb structure made of stainless steel, however, it also has small surface area, and does not provide high dispersion of the Pt component adsorbed, and thus is capable of preventing poisoning of the SCR by re-volatilization of once trapped Pt component. In addition, the flow-through type honeycomb structure made of stainless steel is also preferable in view of having high strength. In the exhaust gas purification apparatus for an automobile, because of limited mounting space for parts, it is preferable that even such a trap has as smaller dimension as possible. To attain a trap having as larger capacity as possible under such restriction, a honeycomb structure having the same outer diameter as in the DOC or the DPF at the former stage is suitable, and it is preferable that thickness thereof (length in an axis line direction of a through hole) is made as thin as possible. Here, the trap made of ceramics tends to be easily fractured by vibration or the like during running of an automobile, in the case of thin thickness, while one made of stainless steel has no risk of fracture like in a honeycomb made of ceramics, even in a thin trap.

Thickness of the trap may be set as appropriate, however, because flow of exhaust gas discharged from an automobile is fast, it requires suitable time for the noble metal component to be adsorbed on the trap, and it is set at 10 mm or higher, and preferably 20 mm or higher.

The trap means, in the exhaust gas purification catalyst apparatus of the present invention, is arranged between the oxidation catalyst (DOC) and the selective reduction catalyst (SCR). Clearance between the oxidation catalyst (DOC) and the trap means is not especially limited, and is set as appropriate in consideration of a control method for an engine, or flow rate or temperature of exhaust gas, or a material of the trap or the like, such as around a place where flow of exhaust gas most tabulates, just after the DOC, or around a place where laminar flow is attained, however, it is desirable that they are as close as possible to enhance collecting effect of the noble metal component. However, because contact of the DOC and the trap could fracture each other by collision in vibration, it is preferable to take measures for vibration suppression or arrangement apart by certain distance, in the case of arranging them in a contacted state. In this way, in the case of arranging the DOC and the trap, it is difficult to prescribe specific clearance thereof, however, it is set, for example, at 0 to 10 cm, preferably at 1 to 6 cm, and more preferably at 1 to 3 cm. By arranging the trap in this way, contamination of the SCR catalyst by the noble metal component slipped can be prevented, and there is no oxidation of the ammonia component sprayed from the reducing agent spraying means by the Pt component adsorbed on the trap, and thus the ammonia component supplied can be utilized effectively in the SCR.

On the other hand, clearance between the trap means and the selective reduction catalyst (SCR) may be close or apart, because the noble metal component has been collected by the trap means. Specific clearance is decided in consideration of total size of the exhaust gas purification catalyst apparatus, flow rate or temperature of exhaust gas, or a control method for an engine or the like.

In the case where the injection is arranged forward the trap of the present invention, like DOC+Injection+Trap+SCR, denitrification performance in the SCR may be enhanced in some cases, because an ammonia component is stirred by the trap. In this case, it is desirable to assume the ammonia component to be oxidized by the trap adsorbed with the Pt component, and to supply the ammonia component to the SCR, in an amount comparable to compensate for it by the reducing agent spraying means (Injection).

[Layout: DOC+DPF+Trap+Injection+SCR]

In the exhaust gas purification catalyst apparatus of the present invention, a layout of DOC+Trap+Injection+SCR may be said one of practical configurations. Such a configuration is similar to DOC+DPF+SCR which has conventionally been investigated (the PATENT LITERATURE 4). However, in this PATENT LITERATURE 4, the DPF is a collecting means of soot (fine particle), and there has been no description that the noble metal component may be diffused from the DOC, nor the means for trapping it.

In the present invention, such a layout is preferable where a filter (DPF) for collecting the fine particle component in exhaust gas, or a catalyzed filter (CSF) for collecting the fine particle component, for combustion and removal, is further arranged. The former is a layout where the trap means is added to conventional DOC+DPF+SCR. In this case, a part of the Pt component slipping from the DOC is once adsorbed onto the DPF, however, the Pt component is collected at the downstream thereof and thus there is no contamination of the SCR catalyst by the Pt component.

However, even when a non-catalyzed DPF is used, contamination of the SCR catalyst by the Pt component cannot be prevented completely without adding the trap means. In addition, the Pt component slipped from the DOC deposits not only on a substrate surface of the DPF but also on the fine particle component deposited. The Pt component deposited on the fine particle component has high possibility to re-volatilize and slip in combustion of the fine particle component. Therefore, even in the case of using the DPF not containing the Pt component, it is preferable to arrange the trap forward the SCR. Similarly as in the DOC, the honeycomb structure is used also in the DPF. It is desirable that the honeycomb structure to be used in the DPF or the CSF is the wall-flow type honeycomb structure.

The Pt component slipped from the DOC, when adsorbed onto the DPF, becomes possible to exert function of the CSF, however, because Pt concentration adsorbed on the DPF is at most ten and several ppm, the amount is too low to exert combustion function of soot (the fine particle component).

On the other hand, it is considered possible that the Pt component slipped from the DOC can be trapped by the CSF and denitrification performance in the SCR catalyst can be maintained, even by DOC+CSF+SCR using only the Pd component, because combustion of the fine particle component in the CSF is possible and the Pd component is hard to volatilize, by adopting only the Pd component, which volatilizes relatively little, for the noble metal component to be used in the CSF. However, it is not preferable by the following reason.

That is, $NO_2$ is consumed in combustion of the fine particle component in the DPF (the PATENT LITERATURE 3). Here, when the noble metal component in the CSF is only the Pd component, there is only consumption of $NO_2$ in the CSF, and $NO_2$ is not generated in such an amount as required in enhancement of $NO_x$ purification capability in the SCR at the latter part. Therefore, even when the Pt component volatilized from the DOC can be trapped, because of decrease in amount of $NO_2$ supplied to the SCR catalyst arranged backward, the SCR catalyst cannot exert $NO_x$ purification performance.

[Layout: DOC+CSF+Trap+Injection+SCR]

In the exhaust gas purification catalyst apparatus of the present invention, to increase concentration of $NO_x$ in exhaust gas supplied to the SCR backward, it is preferable to use the CSF containing the Pt component, as DOC+CSF+Trap+Injection+SCR (refer to Fig. 2).

The DOC not only has oxidation performance of NO but also action to raise temperature of exhaust gas by using HC in exhaust gas. And, the CSF filters out the fine particle component in exhaust gas, and combusts and removes (reproduction of the CSF) the fine particle component filtered out and deposited, by utilization of components and heat in exhaust gas. In reproduction of this CSF, by utilization of $NO_2$, together with heat or oxygen in exhaust gas, burning of the fine particle component can be performed in high efficiency (the PATENT LITERATURE 3).

Here, the noble metal component such as the Pt component or the like slips from the DOC. A part of the Pt component slipped from the DOC may be adsorbed onto the surface of the CSF or the surface of the fine particle component, however, also the Pt component of the CSF could slip backward the CSF with combustion of the fine particle component. And, the Pt component slipped from the CSF causes contamination of the SCR catalyst backward by the noble metal. However, by arrangement of the trap backward the CSF, the Pt component slipped from the CSF is adsorbed by the trap, thus enabling to prevent contamination by the noble metal component in the SCR catalyst backward the trap.

It should be noted that at the further backward of the SCR, there may be arranged a separate DOC aiming at oxidizing $NH_3$ slipping from the SCR, or there may be arranged a catalyst having oxidation performance of $NH_3$ as well as performance for further carrying out reduction of $NO_x$ using $NH_3$ slipped.

[CSF]

In the exhaust gas purification catalyst apparatus of the present invention, the CSF may be a bag filter having high heat resistance performance, however, it is desirable to use a catalyzed wall-flow type honeycomb structure obtained by making porous a sintered body of an inorganic oxide such as silica, alumina, silicon carbide, and cordierite.

It is preferable that the CSF contains the Pt component as the noble metal component. By containing the Pt component, even the CSF is also capable of exerting NO oxidation performance, increasing $NO_2$ concentration in exhaust gas and enhancing $NO_x$ reductive purification capability in the SCR catalyst at the latter part of the CSF.

In addition, in the present invention, the CSF may contain the Pd component in addition to the Pt component, similarly as in the DOC. By using the Pt component and the Pd component together, NO oxidation performance can be exerted by the Pt component, use amount of the expensive Pt component can be decreased, and combustion performance of the fine particle component in the CSF can be enhanced.

Such a CSF can be said "a structure coated with an oxidation catalyst composition", similarly as the DOC, in the present invention. And, it is preferable that the trap to be used in the present invention is arranged just after the DOC or the CSF containing such a Pt component. That is, clearance between the CSF and the trap means is not especially limited, and is set as appropriate in consideration of a control method for an engine, or flow rate or temperature of exhaust gas, such as around a place where flow of exhaust gas most tabulates, just after the DOC, or around a place where laminar flow is attained, however, it is desirable that they are as close as possible to enhance collecting effect of the noble metal component. However, because contact of the DOC and the trap could fracture each other by collision in vibration, it is preferable to take measures such as a vibration suppression apparatus, or arrangement apart by certain distance, in the case of arranging them in a contacted state. In this way, in the case of arranging the CSF and the trap, it is difficult to regulate specific clearance thereof, however, it is set, for example, at 0 to 10 cm, preferably at 1 to 6 cm, and more preferably at 1 to 3 cm.

Similarly to the above DOC, the honeycomb structure is used also in the CSF. In particular, it is desirable to use a wall-flow type honeycomb structure where through-holes are accumulated in honeycomb shape having one side of the opening of the through-holes open, and the other side closed. The wall-flow type honeycomb structure has a wall of through-holes made of a porous material, where the fine particle component enters in the through-holes from the opening part thereof together with exhaust gas, exhaust gas is discharged backward passing through the porous holes of the wall of the through-holes, and the fine particle component deposits in the closed through-holes. By combusting and removing the fine particle component thus deposited, as described above, the CSF is reproduced, which becomes possible to collect the fine particle component again from exhaust gas.

In the present invention, it is preferable that the catalyzed filter (CSF) is a wall-flow type honeycomb structure coated with a catalyst composition comprising a platinum component as the noble metal component, and amount of platinum component in the noble metal is 10% by weight or higher in metal equivalent, and amount of the noble metal component in the coated catalyst composition is 0.1 to 10 g/L in metal equivalent, per volume of the honeycomb structure. In addition, in the present invention, in the case of using the CSF where the coated amount of platinum is over 1.5 g/L in metal equivalent, significant action effect can be expected. In such a CSF, when exposed to high temperature, volatilization amount of the Pt component is high. It is because the SCR catalyst contains zeolite or a crystal metal aluminophosphate which easily is poisoned by the Pt component, however, because of arrangement of the trap means backward the CSF, the Pt component volatilizing out can be trapped and decrease in activity can be suppressed.

In the preferable exhaust gas purification catalyst apparatus of the present invention, the following layout is included, where the CSF using the Pt component, which easily volatilizes at high temperature, is installed at farther downstream than the SCR:

[Layout: DOC+Trap+Injection+SCR+CSF]

In this way, even when the Pt component volatilizes from the CSF, influence by the Pt component in the CSF can be avoided, because the SCR is installed farther downstream than the CSF.

II [Diesel automobile]

The exhaust gas purification catalyst apparatus of the present invention is used by arranging in a flow passage of exhaust gas discharged from a diesel engine, in particular, an automotive diesel engine.

As described above, with recent enhancement of environmental consciousness, reduction of amount of $CO_2$ has also been required to exhaust gas discharged from the diesel automobile, and further enhancement of fuel consumption has been desired. One factor incurring deterioration of fuel consumption in the diesel automobile is reproduction of the CSF which has collected the fine particle component. However, in many cases, because temperature of exhaust gas from a diesel engine is 400°C or lower, it is hard to combust the fine particle component, as it is. Accordingly, temperature of fine particle component is raised in reproduction of the CSF, to burn and remove the fine particle component collected. And, in order to raise temperature of exhaust gas, the HC component such as fuel is supplied to the DOC and this HC component is combusted to raise temperature of exhaust gas. Accordingly, aiming at burning the fine particle component, in particular, a soot component, there is the case where exhaust gas is heated at 600°C or higher (JP-A-2003-148141, paragraph 0012 or the like).

However, even by such a degree of temperature of exhaust gas, it is impossible to significantly decrease reproduction frequency of the CSF. Accordingly, to reduce reproduction frequency of the CSF, it becomes necessary to decrease fuel amount to be used in reproduction of a filter, by collecting a large quantity of the fine particle component in the CSF, supplying a large quantity of fuel to the DOC all at once, and raising temperature of exhaust gas up to 700°C or higher, to burn a large quantity of the fine particle component all at once.

However, heating the exhaust gas up to 700°C or higher using the DOC, as described above, promotes volatilization of the noble metal component, slips the noble metal volatilized to the backward SCR catalyst, resulting in decrease in denitrification performance of the SCR catalyst. However, use of the exhaust gas purification catalyst apparatus of the present invention is capable of suppressing slip of the noble metal component from the DOC or the CSF, and suppressing contamination of the SCR catalyst by the noble metal component. Accordingly, by the exhaust gas purification catalyst apparatus of the present invention, such a diesel automobile can be provided that has good fuel consumption and small discharge amount of NOx, which have been difficult to attain up to now.

It should be noted that, aiming at enhancement of fuel consumption, there may be the case where exhaust gas is heated up to 800°C or higher or 900°C or higher by the DOC. In this case, volatilization of the Pt component increases more and decrease in activity of the SCR catalyst becomes significant. The exhaust gas purification catalyst apparatus of the present invention exerts superior effect, even under such severe use environment.

III [Method for exhaust gas purification]

The method for exhaust gas purification of the present invention is characterized, into the above exhaust gas purification catalyst apparatus, by flowing through exhaust gas discharged from a diesel engine, oxidizing the nitrogen oxide (NO) in exhaust gas with the oxidation catalyst (DOC), and then supplying from the reducing agent spraying means the reducing agent selected from the urea component or the ammonia component to reduce the nitrogen oxide ($NO_x$) by making contacted with the selective reduction catalyst (SCR), as well as collect the noble metal component volatilized from the oxidation catalyst (DOC) using the trap means.

In the present invention, it is preferable to combust and remove the fine particle component in exhaust gas backward the oxidation catalyst (DOC), by supplying a hydrocarbon component forward the oxidation catalyst (DOC) and heating exhaust gas by the noble metal component. In addition, it is preferable that the oxidation catalyst (DOC) is used to control for adjusting molar fraction (NO/NO$_2$) of nitrogen monoxide /nitrogen dioxide in exhaust gas at 1/2 to 2/1. In particular, it is preferable to use the exhaust gas purification catalyst apparatus, having a configuration of DOC+CSF+SCR, in a diesel engine for performing such control as to increase heat generation amount in the DOC, to decrease reproduction frequency of the filter and combust a large quantity of the fine particle component all at once. To raise temperature of exhaust gas by the DOC, there has been adopted a method for supplying relatively more fuel into an engine to generate unburnt HC so as to supply it to the DOC; a method for jetting and supplying fuel itself to the DOC; a method for jetting fuel after ignition of mixed air inside a cylinder; or the like.

It should be noted that, even in the case where the hydrocarbon component is not supplied to the DOC, or even when the hydrocarbon component is supplied but heat generation is suppressed so as not to raise up to 700°C or higher in the DOC, there is fear of volatilization of platinum oxide, or contamination of the SCR catalyst caused by peeling of a catalyst component containing the noble metal component from the oxidation catalyst such as the DOC or the CSF, in the long-term view, and it is without saying that the present invention is effective also to a diesel engine performing such a control.

EXAMPLES

Explanation will be given below by comparing Examples and Comparative examples of the present invention, however, the present invention should not be limited to these Examples.

[Oxidation catalyst 1]: Pt + Pd

Concentration of an aqueous solution of a platinum ammonium salt, an aqueous solution of palladium nitrate and γ-alumina (a specific surface area value of 220 m$^2$/g) was adjusted with water, and then they were milled and mixed using a ball mill to obtain catalyst composition raw material slurry. This catalyst composition raw material slurry 1 was coated, by a wash-coat method, on a flow-through type honeycomb structure made of cordierite, having a cell density of 300 cell/inch$^2$ (about 46. 5 cell/cm$^2$), a wall thickness of 8 mil (about 0.2 mm), a length of 20 mm and a diameter of 24 mm. After drying a honeycomb substrate coated with the catalyst composition raw material slurry 1, it was fired at 550°C for 30 minutes under air atmosphere to obtain an oxidation catalyst 1, where a noble metal component is supported on an alumina component, which is a base material. Amounts of the catalyst components in this oxidation catalyst 1 are shown in Table 1. In Table 1, numbers in [( )] represent component weight [g/L] per unit volume of the honeycomb.

[Oxidation catalyst 2]: Pt

An oxidation catalyst 2 was obtained similarly as in the oxidation catalyst 1 except that the flow-through type honeycomb structure made of cordierite was changed to a wall-flow type honeycomb structure made of cordierite, having a cell density of 300 cell/inch$^2$ (about 46.5 cell/cm$^2$), a wall thickness of 12 mil (about 0.3 mm), a length of 20 mm and a diameter of 24 mm and a catalyst composition raw material slurry 1 was changed to a catalyst composition raw material slurry 2 not using the aqueous solution of palladium nitrate. Amounts of the catalyst components in this oxidation catalyst 2 are shown in Table 1.

[Oxidation catalyst 3]: Pt + Pd

An oxidation catalyst 3 was obtained similarly as in the oxidation catalyst 1 except that the flow-through type honeycomb structure made of cordierite was changed to a wall-flow type honeycomb structure made of cordierite, having a cell density of 400 cell/inch$^2$ (about 62 cell/cm$^2$), a wall thickness of 6 mil (about 0.15 mm), a length of 10 mm and a diameter of 24 mm. Amounts of the catalyst components in this oxidation catalyst 3 are shown in Table 1.

[SCR catalyst: SCR 1]

(SCR: Fe ion exchanged β zeolite)

Concentration of β zeolite ion exchanged with an iron element (a concentration of 2% by weight, in iron element equivalent, an ion exchanged amount of 70%, SAR=35) and silica as a binder was adjusted with water, and then they were milled using a ball mill to obtain SCR catalyst composition raw material slurry. This slurry was coated, by a wash-coat method, on a flow-through type honeycomb structure made of cordierite, having a cell density of 300 cell/inch$^2$ (about 46.5 cell/cm$^2$), a wall thickness of 5 mil (about 0.13 mm), a length of 20 mm and a diameter of 24 mm. After drying the honeycomb, it was fired at 500°C for 2 hours under air atmosphere to obtain an SCR catalyst (SCR 1). Amounts of the catalyst components in SCR 1 are shown in Table 1.

[Honeycomb made of a metal: Trap 1]

A flow-through type honeycomb structure made of stainless steel, having a cell density of 600 cell/inch$^2$ (about 93 cell/cm$^2$), a wall thickness of 30 $\mu$m, a length of 10 mm and a diameter of 24 mm.

[Honeycomb made of cordierite: Trap 2]

A flow-through type honeycomb structure made of cordierite, having a cell density of 300 cell/inch$^2$ (about 46.5 cell/cm$^2$), a wall thickness of 8 mil (about 0.2 mm), a length of 10 mm and a diameter of 24 mm. This honeycomb structure was crushed to measure BET value, and it was confirmed to be 10 m$^2$/g or smaller.
[Table 1]

| | |
|---|---|
| Oxidation catalyst 1 | Pt(1.5)·Pd(0.5)/$\gamma$-Alumina(200) |
| Oxidation catalyst 2 | Pt(1)/$\gamma$-Alumina (30) |
| Oxidation catalyst 3 | Pt(0.6)·Pd(0.3)/$\gamma$-Alumina(30) |
| SCR 1 | Fe-$\beta$(200)+SiO2(20) |

(Examples 1 to 6)

The above oxidation catalyst 1, oxidation catalyst 2, oxidation catalyst 3, trap 1, trap 2, and SCR 1 were arranged in an exhaustion pipe (a diameter of 24 mm and a length of 700 mm), as shown in Table 2, to obtain an exhaust gas purification catalyst apparatus of the present invention. Using this apparatus, aging was performed by passing through air heated at 900°C for 20 hours in a flow rate of 10 [L/minute]. It should be noted that, in performing aging for the Examples, distance between the oxidation catalyst and the trap is 15 mm, and distance between the trap and the SCR 1 is 200 mm. In addition, in the case of using two oxidation catalysts, distance between the oxidation catalysts is 15 mm. In addition, in aging test for Comparative Example not arranging the trap, a layout is the same as in evaluation in Example, except for not arranging the trap.
[Table 2]

| | |
|---|---|
| Example 1 | Oxidation catalyst 1+Trap 1+Injection+SCR 1 |
| Example 2 | Oxidation catalyst 1+Trap 2+Injection+SCR 1 |
| Example 3 | Oxidation catalyst 2+Trap 1+Injection+SCR 1 |
| Example 4 | Oxidation catalyst 2+Trap 2+Injection+SCR 1 |
| Example 5 | Oxidation catalyst 1+Oxidation catalyst 2+Trap 1+Injection+SCR 1 |
| Example 6 | Oxidation catalyst 1+Oxidation catalyst 2+Trap 2+Injection+SCR 1 |
| Comparative Example 1 | Oxidation catalyst 1+Injection+SCR 1 |
| Comparative Example 2 | Oxidation catalyst 2++Injection+SCR 1 |
| Comparative Example 3 | Oxidation catalyst 1+Oxidation catalyst 2+Injection+SCR 1 |

Denitrification performance was verified under the following conditions on the SCR 1 after subjecting to aging in this way. Model gas was used in measurement. NO$_x$ conversion rate after denitrification was measured using a mass spectrometer. Results are shown in Figs. 5 to 7.
It should be noted that in model gas in Examples, NO:NO$_2$=4:1. This is NO:NO$_2$ ratio which cannot be said to provide not necessarily high reactivity. Reason for performing the evaluation under condition which cannot be said ideal in this way is because of assumption of a practical running state of an automobile. In a practical running state of an automobile, NO:NO$_2$ ratio in exhaust gas changes every moment, and NO:NO$_2$ ratio suitable for the SCR reaction cannot necessarily be maintained. It is understood from the present Example, that the exhaust gas purification catalyst apparatus of the present invention is capable of exerting superior purification performance of NO$_x$ even in NO:NO$_2$ ratio assuming a practical running state in this way.

<Verification conditions>

· Model gas composition: NO=200 ppm, NO$_2$=50 ppm, NH$_3$=250 ppm, CO$_2$=100 ppm, O$_2$=5%, H$_2$O=10%, N$_2$=balance
· Model gas flow rate: 9.3 L/min
(in space velocity equivalent in SCR 1≒61,000 /h)
· Surface temperature of the SCR catalyst whose NO$_x$ purification capability was measured:

200°C, 300°C, 400°C, 500°C

From this result, it is understood that the catalyst apparatus of Examples 1 to 6 shows superior NO$_x$ conversion rate in the SCR, and is superior in denitrification performance. In particular, it has high denitrification performance at 400°C, as well as maintains performance close to that at 300°C even at 500°C.

(Comparative Examples 1 to 3)

The above oxidation catalysts 1 and 2, and the SCR 1 were arranged in an exhaustion pipe, as shown in Table 2, except that trap 1 and trap 2 were not used, to obtain an exhaust gas purification catalyst apparatus for comparison. Using this apparatus, aging was performed by passing through air heated at 900°C for 20 hours in a flow rate of 10 [L/ minute]. Results are shown in Figs. 5 to 7.
From this result, it is understood that the catalyst apparatus of Comparative Example shows decreased NO$_x$ conversion rate in the SCR, as compared with the catalyst apparatus of Example, and denitrification performance is insufficient. In particular, at 500°C, it has low denitrification performance which was close to that at 200°C, or lower.

(Example 7)

The above oxidation catalyst 3 and the trap 2 were arranged so as to be "the oxidation catalyst 3 + the trap 2", and aging was performed under the above aging condition to measure amount of a noble metal adsorbed on the trap 2, using ICP-AES (Inductively Coupled Plasma - Atomic Emission Spectrometry).
In addition, the above oxidation catalysts 1 and 2, and SCR 1 were arranged in an exhaustion pipe, as shown in Table 2, similarly as in Example 5 and 6, except that trap 2 was not used, to obtain an exhaust gas purification catalyst apparatus for comparison. Using this apparatus, aging was performed similarly.
From this result, amount of the Pt component in metal equivalent was 15 ppm, and amount of the Pd component in metal equivalent was below 1 ppm.
From the above result, it is understood that volatilization amount of the Pt component is significantly higher as compared with the Pd component, and the trap in the present invention is capable of adsorbing the Pt component.

INDUSTRIAL APPLICABILITY

The exhaust gas purification catalyst apparatus of the present invention can be used in a diesel automobile, which is mounted with a lean-burn engine such as a diesel engine, which discharges harmful substances such as a hydrocarbon (HC), a Soluble Organic Fraction (it may also be referred to as SOF), soot, carbon monoxide (CO), a nitrogen oxide (NO$_x$) and the like, derived from fuel or combustion air.

**Claims**

1. An exhaust gas purification catalyst apparatus arranged with an oxidation catalyst (DOC) comprising a noble metal component for oxidizing a nitrogen oxide (NO) in exhaust gas discharged from a diesel engine, a reducing agent spraying means for supplying a reducing agent selected from an urea component or an ammonia component, and a selective reduction catalyst (SCR) for reducing the nitrogen oxide (NO$_x$) by making contacted with the reducing agent, in this order from the upstream side of a flow passage of exhaust gas, **characterized in that**:

the selective reduction catalyst (SCR) does not comprise the noble metal component and comprises zeolite or a crystal metal aluminophosphate; and further

a trap means for collecting the noble metal component volatilized from the oxidation catalyst (DOC) is arranged between the oxidation catalyst (DOC) and the selective reduction catalyst (SCR).

2. The exhaust gas purification catalyst apparatus according to claim 1, **characterized in that** the trap means is a linear material made of a metal, or a honeycomb structure made of a metal or cordierite.

3. The exhaust gas purification catalyst apparatus according to claim 1, **characterized in that** the selective reduction catalyst (SCR) comprises β-type zeolite and does not comprise a vanadium component.

4. The exhaust gas purification catalyst apparatus according to claim 1, **characterized in that** the oxidation catalyst (DOC) supports a platinum component, as the noble metal component, on a one-piece structure type substrate.

5. The exhaust gas purification catalyst apparatus according to claim 4, **characterized in that** platinum in the noble metal component is in an amount of 10% by weight or higher, in metal equivalent, and the supporting amount is 0.1 to 10 g/L, in metal equivalent, per volume of the one-piece structure type substrate.

6. The exhaust gas purification catalyst apparatus according to claim 4, **characterized in that** the one-piece structure type substrate is a flow-through type honeycomb structure, or a wall-flow type honeycomb structure.

7. The exhaust gas purification catalyst apparatus according to claim 1, **characterized by** further arranging a filter (DPF) for collecting a fine particle component in exhaust gas, or a catalyzed filter (CSF) for collecting the fine particle component to combust and remove it by catalytic action.

8. The exhaust gas purification catalyst apparatus according to claim 7, **characterized by** arranging a trap means for collecting the noble metal component, a reducing agent spraying means, and a selective reduction catalyst (SCR) for reducing the nitrogen oxide ($NO_x$) by making contacted with the reducing agent, at the downstream of the catalyzed filter (CSF), in this order, as well as arranging the catalyzed filter (CSF) for collecting the fine particle component to combust and remove it, at the downstream of the oxidation catalyst (DOC) comprising a noble metal component for oxidizing a nitrogen oxide (NO) in exhaust gas.

9. The exhaust gas purification catalyst apparatus according to claim 7 or 8, **characterized in that** the catalyzed filter (CSF) is a wall-flowtype honeycomb structure coated with a catalyst composition comprising a platinum component as the noble metal component, and amount of platinum component in the noble metal is 10% by weight or higher, in metal equivalent, and amount of the noble metal component in the coated catalyst composition is 0.1 to 10 g/L, in metal equivalent, per volume of the honeycomb structure.

10. A diesel automobile mounted with the exhaust gas purification catalyst apparatus according to any one of claims 1 to 9.

11. A method for exhaust gas purification, **characterized, in** the exhaust gas purification catalyst apparatus according to any one of claims 1 to 9, by flowing through exhaust gas discharged from a diesel engine, oxidizing the nitrogen oxide (NO) in exhaust gas with the oxidation catalyst (DOC), and then supplying from the reducing agent spraying means the reducing agent selected from the urea component or the ammonia component to reduce the nitrogen oxide ($NO_x$) by making contacted with the selective reduction catalyst (SCR), as well as collect the noble metal component volatilized from the oxidation catalyst (DOC) by the trap means.

12. The method for exhaust gas purification according to claim 11, **characterized by** supplying a hydrocarbon component forward the oxidation catalyst (DOC), and heating exhaust gas by a noble metal component to combust and remove a fine particle component in exhaust gas backward the oxidation catalyst (DOC).

13. The method for exhaust gas purification according to claim 11, **characterized by** adjusting molar fraction ($NO/NO_2$) of nitrogen monoxide /nitrogen dioxide in exhaust gas at 1/2 to 2/1, by the oxidation catalyst (DOC).

14. The method for exhaust gas purification according to claim 12, **characterized in that** heating temperature of exhaust gas backward the oxidation catalyst (DOC) is 700°C or higher.

FIG. 1

1 : Diesel Engine

3 : Urea

4 : DOC

8 : Trap

5 : SCR

2 : Exhaust gas stream

31

FIG. 2

1 : Diesel Engine

3 : Urea

71

4 : DOC

6 : CSF

8 : Trap

5 : SCR

2 : Exhaust gas stream

31

7 : Fuel

FIG. 3

1 : Diesel Engine

3 : Urea

4 : DOC

5 : SCR

2 : Exhaust gas stream

31

FIG. 4

1 : Diesel Engine

3 : Urea

4 : DOC

6 : CSF

5 : SCR

71

2 : Exhaust gas stream

31

7 : Fuel

23

FIG. 5

SCR evaluation:oxidation catalyst 1+Trap+SCR

FIG. 6

SCR evaluation:oxidation catalyst 2+Trap+SCR

FIG. 7

SCR evaluation: oxidation catalyst 1 + oxidation catalyst 2 + Trap + SCR

| **INTERNATIONAL SEARCH REPORT** | International application No. |
|---|---|
| | PCT/JP2011/060623 |

| A. CLASSIFICATION OF SUBJECT MATTER |
|---|
| *B01D53/94*(2006.01)i, *B01D53/96*(2006.01)i, *B01J23/96*(2006.01)i, *B01J38/00* (2006.01)i, *F01N3/02*(2006.01)i, *F01N3/08*(2006.01)i, *F01N3/24*(2006.01)i, *F01N3/28*(2006.01)i |
| According to International Patent Classification (IPC) or to both national classification and IPC |

| B. FIELDS SEARCHED |
|---|
| Minimum documentation searched (classification system followed by classification symbols) |
| B01D53/94, B01D53/96, B01J23/96, B01J38/00, F01N3/02, F01N3/08, F01N3/24, F01N3/28 |

Documentation searched other than minimum documentation to the extent that such documents are included in the fields searched

| Jitsuyo Shinan Koho | 1922-1996 | Jitsuyo Shinan Toroku Koho | 1996-2011 |
|---|---|---|---|
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JEN, H.-W. et al., Detection, Origin and Effect of Ultra-Low Platinum Contamination on Diesel-SCR Catalysts, SAE Tech. Pap. Ser., 2008.10.06, ABSTRACT, EXPERIMENTAL, AGING OF DIESEL AFTERTREATMENT SYSTEM | 1,7,9-12,14<br>2-6,8,13 |
| Y | JP 2009-262098 A (N.E. Chemcat Corp.), 12 November 2009 (12.11.2009), claims 1, 2, 12, 13; paragraphs [0056], [0071], [0077], [0078], [0080] & US 2009/0269265 A1 & EP 2113296 A2 | 2-6,8,13 |
| A | JP 4-118028 A (Babcock-Hitachi Kabushiki Kaisha), 20 April 1992 (20.04.1992), claim 1 (Family: none) | 1-14 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 August, 2011 (02.08.11) | 16 August, 2011 (16.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

<div align="center">**INTERNATIONAL SEARCH REPORT**</div>

| | International application No. |
|---|---|
| | PCT/JP2011/060623 |

---

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III     Observations where unity of invention is lacking (Continuation of item 3 of first sheet)**

This International Searching Authority found multiple inventions in this international application, as follows:

```
   Document 1: JEN, H.-W. et al., Detection, Origin and Effect of Ultra-Low
Platinum Contamination on Diesel-SCR Catalysts, SAE Tech. Pap. Ser., 2008.10.06

   The invention in claim 1 cannot be considered to be novel in the light of
the document 1, and does not have a special technical feature.  Therefore,
the inventions in claims 1-14 do not comply with the requirement of unity
of invention.  Meanwhile, the inventions in claim 1, 2 and 10 are relevant
to main invention.
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5038420 A
- JP 8103636 A
- JP 1318715 A
- JP 2002502927 A
- US 6823663 B
- US 6928806 B
- JP 2003148141 A
- JP 8038897 A

- JP 2004290827 A
- JP 2009167844 A
- JP 2008526509 B
- JP 2008155204 A
- JP 60086011 A
- US 20080241060 A
- JP 62004441 A

**Non-patent literature cited in the description**

- *Catalysis Today,* 2006, vol. 114, 3-12
- Detection, Origin and Effect of Ultra-Low Platinum Contamination on Diesel-SCR Catalysts. SAE International. Ford Motor Company, 06 October 2008
- Impact and Prevention of Ultra-Low Contamination of Platinum Group Metals on SCR Catalysts Due to DOC Design. *SAE International,* 20 April 2009

- Influence of Support Materials and Aging on NO Oxidation Performance of Pt Catalysts under an Oxidative Atmosphere at Low Temperature. *JOURNAL OF CHEMICAL ENGINEERING OF JAPAN,* 2007, vol. 40 (9), 741-748
- *JOURNAL OF CHEMICAL ENGINEERING OF JAPAN,* 2007, vol. 40 (9), 741-748